(19) Europäisches Patentamt
European Patent Office
Office européen des brevets

(11) **EP 3 429 106 A1**

(12) **EUROPEAN PATENT APPLICATION**
published in accordance with Art. 153(4) EPC

(43) Date of publication:
**16.01.2019 Bulletin 2019/03**

(51) Int Cl.:
***H04L 1/00*** *(2006.01)*

(21) Application number: **17778545.8**

(86) International application number:
**PCT/CN2017/072473**

(22) Date of filing: **24.01.2017**

(87) International publication number:
**WO 2017/173880 (12.10.2017 Gazette 2017/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **06.04.2016 CN 201610210746**

(71) Applicant: **Huawei Technologies Co., Ltd.
Longgang District
Shenzhen, Guangdong 518129 (CN)**

(72) Inventor: **LAN, Haiqing
Shenzhen
Guangdong 518129 (CN)**

(74) Representative: **Gill Jennings & Every LLP
The Broadgate Tower
20 Primrose Street
London EC2A 2ES (GB)**

(54) **METHOD AND DEVICE FOR REDUCING PACKET LOSS RATIO OF TRANSMISSION**

(57) Embodiments of this application disclose a method and an apparatus for reducing a loss ratio of transmission, to reduce a loss ratio of transmission and improve transmission quality. In some feasible implementations of this application, the method includes: determining, by a source end, a redundancy factor and a redundancy degree, where the redundancy factor indicates a proportion occupied by data for which redundant transmission is required, and the redundancy degree indicates a quantity of copies repeatedly transmitted during the redundant transmission; determining, based on the redundancy factor, a data packet for which the redundant transmission is required; and repeatedly sending the data packet to a destination end based on the quantity of copies indicated by the redundancy degree.

EP 3 429 106 A1

A source end determines a redundancy factor and a redundancy degree — 201

Determine, based on the redundancy factor, a data packet for which redundant transmission is required — 202

Repeatedly send the data packet to a destination end based on a quantity of copies indicated by the redundancy degree — 203

FIG. 2

## Description

This application claims priority to Chinese Patent Application No. 201610210746.4, filed with the Chinese Patent Office on April 6, 2016 and entitled "METHOD AND APPARATUS FOR REDUCING LOSS RATIO OF TRANSMISSION", which is incorporated herein by reference in its entirety.

## TECHNICAL FIELD

This application relates to the field of communications technologies, and specifically to a method and an apparatus for reducing a loss ratio of transmission.

## BACKGROUND

In a modern communications system, packet transmission is a most important and widest transmission mode at present. As a shared transmission mode, the packet transmission has higher transmission resource utilization. The packet transmission is a main bearing manner of existing communication services such as a voice service and a video service. The packet transmission is characterized in that particular information is carried by using an independent data packet. It is quite important to correctly guarantee data packet transmission. A loss ratio (English full name: Loss Ratio, LR for short) is a key indicator for measuring packet switching (English full name: Packet Switching, PS for short) transmission quality. A higher loss ratio indicates poorer PS transmission quality and a more severe damage to a service, or even leads to unavailability of the service. How to reduce a loss ratio of transmission and improve transmission quality with existing network quality is a most important research task in the industry.

## SUMMARY

Embodiments of this application provide a method and an apparatus for reducing a loss ratio of transmission, to reduce a loss ratio of transmission and improve transmission quality.

A first aspect of this application provides a method for reducing a loss ratio of transmission, to reduce a loss ratio in a redundant transmission mode. The method may be used in a communications system in which a packet transmission technology is used, and the method controls redundant transmission by using two parameters, that is, a redundancy degree and a redundancy factor. The redundancy factor indicates a ratio of data for which redundant transmission is required to all data that needs to be transmitted, and the redundancy degree indicates a quantity of copies repeatedly transmitted when a data packet is transmitted in the redundant transmission mode. The method is performed by a source end sending data. After determining a redundancy factor and a redundancy degree, the source end determines, based on the redundancy factor, a data packet for which redundant transmission is required, and repeatedly sends the data packet to a destination end based on a quantity of copies indicated by the redundancy degree. Compared with a conventional redundant transmission mode, in the method, redundant transmission is performed on only a part of data indicated by the redundancy factor and not on all data. In this way, on one hand, only important data may be transmitted in the redundant transmission mode, thereby reducing a loss ratio of the important data and improving transmission quality for the important data. On the other hand, the redundant transmission mode is not used for other data, thereby reducing a quantity of transmitted data packets and reducing transmission bandwidth consumption.

A second aspect of this application provides an apparatus for reducing a loss ratio of transmission, to reduce a loss ratio in a redundant transmission mode. The apparatus may be used in a communications system in which a packet transmission technology is used, and the apparatus controls redundant transmission by using two parameters, that is, a redundancy degree and a redundancy factor. The redundancy factor indicates a ratio of data for which redundant transmission is required to all data that needs to be transmitted, and the redundancy degree indicates a quantity of copies repeatedly transmitted when a data packet is transmitted in the redundant transmission mode. The apparatus may be deployed at a source end sending data. Therefore, after determining a redundancy factor and a redundancy degree, the source end determines, based on the redundancy factor, a data packet for which redundant transmission is required, and repeatedly sends the data packet to a destination end based on a quantity of copies indicated by the redundancy degree. Compared with a conventional redundant transmission mode, the apparatus performs redundant transmission on only a part of data indicated by the redundancy factor and not on all data. In this way, on one hand, only important data may be transmitted in the redundant transmission mode, thereby reducing a loss ratio of the important data and improving transmission quality for the important data. On the other hand, the redundant transmission mode is not used for other data, thereby reducing a quantity of transmitted data packets and reducing transmission bandwidth consumption.

With reference to the method and the apparatus according to the foregoing two aspects:
Optionally, to help the destination end identify whether the redundant transmission mode is used for a received data packet, the source end may add a particular identifier to the data packet for which the redundant transmission is required.

Optionally, the source end may obtain a loss ratio of transmitted data from the destination end, and determine, based on a principle that the redundancy degree is positively correlated to the loss ratio, the redundancy degree based on the loss ratio.

Optionally, the source end may obtain a transmission congestion level of a transmission bandwidth from the destination end, and determine, based on a principle that the redundancy factor is negatively correlated to the transmission congestion level, the redundancy factor based on the transmission congestion level.

Optionally, after obtaining a loss ratio and a transmission congestion level from the destination end, the source end may determine the redundancy degree based on the loss ratio and the transmission congestion level, and determine the redundancy factor based on the loss ratio and the transmission congestion level, where the redundancy degree is positively correlated to the loss ratio and is negatively correlated to the transmission congestion level, and the redundancy factor is positively correlated to the loss ratio and is negatively correlated to the transmission congestion level. Optionally, the source end and the destination end may be different devices in a communications network, or may be different modules in a same device.

It can be learned from the foregoing description that, in some feasible implementations of this application, data is transmitted in the redundant transmission mode, and the redundant transmission mode is controlled by using two parameters, namely, the redundancy factor and the redundancy degree. Based on the two parameters, redundant transmission is performed on only a part of data and not on all data. In this way, the redundant transmission mode may be used for important data, thereby reducing a loss ratio of the important data and improving transmission quality for the important data. The redundant transmission mode may not be used for other data, thereby reducing a quantity of transmitted data packets and reducing transmission bandwidth consumption.

## BRIEF DESCRIPTION OF DRAWINGS

FIG. 1 is a schematic diagram of a network architecture to which an embodiment of this application is applied;

FIG. 2 is a schematic flowchart of a method for reducing a loss ratio of transmission according to an embodiment of this application;

FIG. 3 is a schematic transmission diagram of sending data to a destination end by a source end according to an embodiment of this application;

FIG. 4 is a schematic diagram of determining a redundancy degree based on a loss ratio to perform redundant transmission according to an embodiment of this application;

FIG. 5 is a schematic diagram of determining a redundancy factor based on a transmission congestion level to perform redundant transmission according to an embodiment of this application;

FIG. 6 is a schematic diagram of determining a redundancy degree and a redundancy factor based on a redundancy degree and a transmission congestion level to perform redundant transmission according to an embodiment of this application;

FIG. 7 is a schematic diagram of a relationship between several solutions according to an embodiment of this application;

FIG. 8 is a schematic structural diagram of an apparatus for reducing a loss ratio of transmission according to an embodiment of this application; and

FIG. 9 is a schematic structural diagram of a computing device according to an embodiment of this application.

## DESCRIPTION OF EMBODIMENTS

To make a person skilled in the art understand the technical solutions in this application better, the following clearly and completely describes the technical solutions in the embodiments of this application with reference to the accompanying drawings in the embodiments of this application. Apparently, the described embodiments are merely some but not all of the embodiments of this application.

In the specification, claims, and accompanying drawings of this application, the terms "first", "second", "third", and the like are intended to distinguish between different objects but do not indicate a particular order. Moreover, the terms "including", "comprising", and any other variant thereof, are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

As described in the background, how to reduce a loss ratio of transmission and improve transmission quality with existing network quality is a most important research task in the industry. Currently, the following two manners are frequently used to reduce a loss ratio of transmission. Manner 1 is direct redundant transmission. That is, a source end or a transmit end directly sends a plurality of copies of data packets, and a destination end or a receive end needs to receive only one of the copies of data. For example, the transmit end may repeatedly send each data packet twice, and the receive end needs to receive only a data packet sent at any time.

Manner 2 is use of a forward error correction (English full name: Forward Error Correction, FEC for short) technology. A transmit end uses the forward error correction technology. Even if some data packets are lost in a transmission process, a receive end can still restore information about the lost data packets from an existing data packet, that is, each data packet is redundant with information about other data packets.

It is found in practice that, network bandwidth consumption of the manner 1 is large, and each time one more copy of data packets is transmitted, double network bandwidths needs to be consumed. An algorithm of the manner 2 is complex, a large quantity of processor resources are required, a forward error correction capability is limited, and correct error correction cannot be performed for excessively frequent packet loss.

For the foregoing problem, an objective of this application is to provide a solution that not only meets a requirement of reducing a loss ratio, but also may reduce transmission bandwidth consumption compared with the manner 1 and improve a guarantee for important data.

For this purpose, the embodiments of this application provide a method and a corresponding apparatus for reducing a loss ratio of transmission.

The following provides detailed descriptions separately by using specific embodiments.

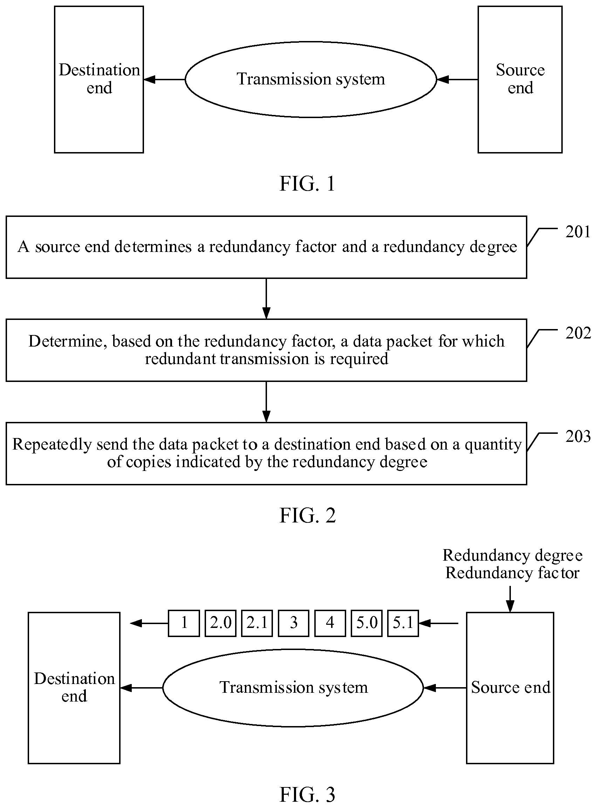

Referring to FIG. 1, FIG. 1 is a schematic diagram of a network architecture to which an embodiment of this application is applied. The network architecture includes a source end, a destination end, and a transmission system connecting the source end and the destination end.

The transmission system may also be referred to as a transmission network, and the transmission network may be any network, for example, including a wired network, a wireless network, a TDM (time-division multiplexing, time-division multiplexing) network, or a packet transmission network. The source end and the destination end may be different devices in a communications system. In this case, the source end and the destination end may be respectively referred to as a source device and a destination device. Alternatively, the source end and the destination end may be different modules in a same device. In this case, the source end and the destination end may be respectively referred to as a source module and a destination module. For example, the source device and the destination device each may be a device such as a base station, a terminal, or a gateway. For example, for an uplink transmission direction of a wireless network, the source device may be a base station, and the destination device may be a gateway.

This application may be applied to a wired network or a wireless network; and may be applied to any layer of a transmission protocol, such as an IP (Internet Protocol, Internet Protocol) layer or a MAC (Media Access Control, Media Access Control) layer.

It should be noted that, the technical solutions of the embodiments of this application may be applicable to any wired or wireless communications system such as a Universal Mobile Telecommunications System (English full name: Universal Mobile Telecommunications System, UMTS for short), a Global System for Mobile Communications (English full name: Global System for Mobile Communication, GSM for short), Code Division Multiple Access (English full name: Code Division Multiple Access, CDMA for short), a wireless local area network (English full name: Wireless Local Area Networks, WLAN for short), Wireless Fidelity (English full name: Wireless Fidelity, WiFi for short), Long Term Evolution (English full name: Long Term Evolution, LTE for short), and a next-generation network such as 5G (5-Generation, 5th-generation mobile communications technology).

Referring to FIG. 2, an embodiment of this application provides a method for reducing a loss ratio of transmission. The method may include the following steps.

201. A source end determines a redundancy factor and a redundancy degree, where the redundancy factor indicates a proportion occupied by data for which redundant transmission is required, and the redundancy degree indicates a quantity of copies repeatedly transmitted during the redundant transmission.

202. Determine, based on the redundancy factor, a data packet for which the redundant transmission is required.

203. Repeatedly send the data packet to a destination end based on the quantity of copies indicated by the redundancy degree.

A redundant transmission mode is used for this embodiment of this application, to increase a transmission success rate of the data packet, reduce a loss ratio of transmission, and improve transmission quality. The redundant transmission mode is controlled by using two parameters, namely, the redundancy factor and the redundancy degree.

The redundancy degree indicates a quantity of copies repeatedly transmitted during the redundant transmission. A value of the parameter indicates a quantity of several copies of a same data packet sent by a transmit end. When the redundancy degree is 1, it indicates that only one copy is transmitted, and this is a normal transmission mode. When the redundancy degree is 2, it indicates that two copies of a same data packet are sent, and the rest may be deduced by analogy. The redundancy degree is a positive integer, the redundancy degree is indicated by using k herein, and k is a positive integer.

The redundancy factor indicates a proportion occupied by data for which redundant transmission is required. The parameter indicates a proportion of data packets for which the redundant transmission is required. For example, when the redundancy degree is 2 and the redundancy factor is 60%, it indicates that two copies of 60% of the data packets are sent, and only one copy of 40% of the data packets is sent. When the redundancy degree is 1, regardless of what the redundancy factor is, only one copy of the data packets is sent. The redundancy factor is indicated by using p herein, and a value range of p is [0, 1].

For to-be-transmitted data, the source end first determines a redundancy degree and a redundancy factor, and then determines, based on the redundancy factor, a data packet for which the redundant transmission is required. A data packet for which the redundant transmission is required may be determined based on importance. For example, when the redundancy factor is 60%, all data packets may be sorted based on importance, and data packets sorted top 60% are determined as data packets for which the redundant transmission is required. When the data is finally sent, a plurality of copies of the data packets determined as data packets for which the redundant transmission is required are sent based on a quantity of copies indicated by the redundancy degree, and only one copy of other data packets is sent in an ordinary transmission mode.

In some embodiments, a redundancy factor may be determined based on a congestion level, and a larger congestion level indicates a smaller redundancy factor. For example, when there is no congestion, a redundancy factor may be set to 100%. Additionally, a redundancy factor may also be determined based on a transmission delay of the transmission direction, and a larger delay indicates a smaller redundancy factor. A redundancy degree may be determined based on a loss ratio, and a larger loss ratio indicates a larger redundancy degree.

Referring to FIG. 3, FIG. 3 is a schematic transmission diagram of sending data to a destination end by a source end according to an embodiment of this application. The source end determines, based on a redundancy degree and a redundancy factor, a proportion of data packets on which data packet redundant transmission is performed, and also determines a quantity of copies of data packets that are sent simultaneously and that are the same as a data packet on which redundant transmission is performed. As shown in FIG. 3, data packets 1, 3, and 4 are sent only once in an ordinary transmission mode; a data packet 2 is separately sent twice in a redundant transmission mode, as shown by data packets 2.0 and 2.1 in the figure; and a data packet 5 is also separately sent twice in the redundant transmission mode, as shown by data packets 5.0 and 5.1 in the figure. Before the destination end correctly receives a first copy of a data packet, other backup data is directly discarded after being received. For example, if the destination end correctly receives the data packet 2.0, the data packet 2.1 may be directly discarded; otherwise, if the data packet 2.0 is not correctly received, the received data packet 2.1 is reserved.

Optionally, to help the destination end identify whether the redundant transmission mode is used for a received data packet, the source end may add a particular identifier to the data packet for which the redundant transmission is required. For example, a particular identifier is added to a field or domain of a header, and the identifier may occupy several bits. A location of the particular identifier in the data packet does not need to be designated particularly, provided that both parties, namely, a source device and a destination device agree. In other words, the field carrying the particular identifier may be completely independently defined or an existing field is used as the field carrying the particular identifier. This is not particularly limited herein.

The method for reducing a loss ratio of transmission provided in this embodiment of this application is simply described above. In the method, data is transmitted in the redundant transmission mode, and the redundant transmission mode is controlled by using two parameters, namely, the redundancy factor and the redundancy degree. Based on the two parameters, redundant transmission is performed on only a part of data and not on all data. In this way, the redundant transmission mode may be used for important data, thereby reducing a loss ratio of the important data and improving transmission quality for the important data. The redundant transmission mode may not be used for other data, thereby reducing a quantity of transmitted data packets and reducing transmission bandwidth consumption.

The method of this embodiment of this application is further described in detail below, and the description includes how to determine two parameters for controlling redundant transmission, namely, a redundancy degree and a redundancy factor.

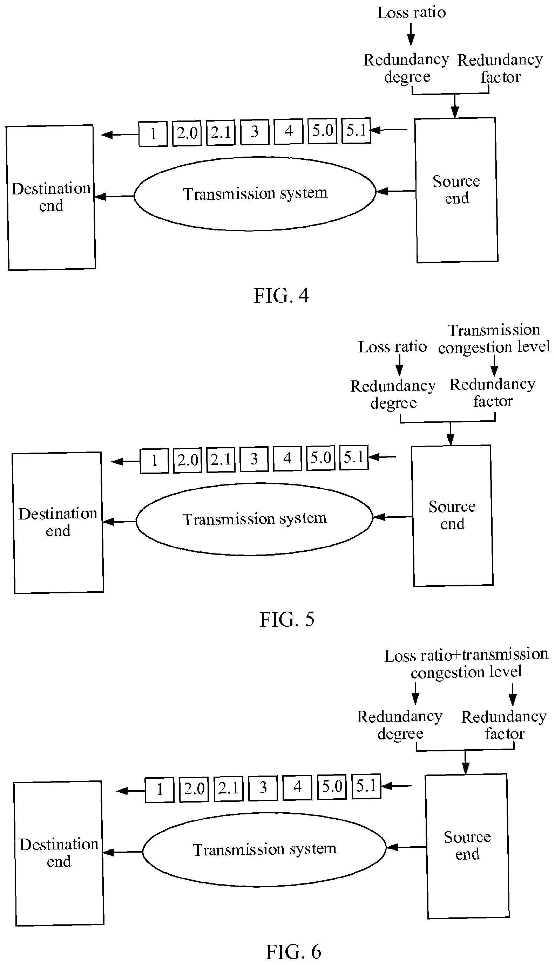

Referring to FIG. 4, in some embodiments of this application, a redundancy degree may be generated or determined based on a loss ratio from a source end to a destination end. In this embodiment, the source end may obtain a loss ratio from the destination end, and determine the redundancy degree based on the loss ratio, where the redundancy degree is positively correlated to the loss ratio.

The positive correlation means that, a larger loss ratio indicates a larger redundancy degree. In other words, a redundancy degree is a non-strictly increasing function of a loss ratio. The redundancy degree needs to be greater than or equal to 1, that is, at least one copy of each data packet needs to be sent; and the redundancy degree cannot exceed a threshold M, and the threshold M is a positive integer and may be configured based on an actual situation. Additionally, the redundancy degree is a positive integer. For example, when the threshold M is equal to 3, the redundancy degree k is equal to 1, 2, or 3.

For example, a redundancy degree may be calculated by using the following straight line formula:

$$k=int(K*d+B)$$

where k is the redundancy degree, d is a loss ratio, K and B are constant parameters, K is a positive parameter, and int indicates rounding. It should be noted that, K and B may be empirical values.

Referring to FIG. 5, in some embodiments of this application, a redundancy factor may be generated or determined based on a transmission congestion level from a source end to a destination end. In this embodiment, the source end may obtain a transmission congestion level from the destination end, and determine the redundancy factor based on the transmission congestion level, where the redundancy factor is negatively correlated to the transmission congestion level.

The negative correlation means that, a larger transmission congestion level indicates a smaller redundancy degree. In other words, a redundancy degree is a non-strictly decreasing function of a transmission congestion level. A transmission congestion level may be indicated by using a value y greater than or equal to "0". When the transmission congestion level y is less than 1, it indicates that there is no congestion, and a smaller value y indicates a more idle transmission bandwidth; when the transmission congestion level y is equal to 1, it indicates that a transmission service rate is exactly equal to a transmission bandwidth; and when the transmission congestion level y is greater than 1, it indicates that there is congestion, and a larger value y indicates more severe transmission congestion. For example, when there is transmission congestion, that is, when the value y is greater than or equal to 1, the redundancy factor may be 0, indicating that a plurality of copies are not sent. For example, when the transmission congestion level y is less than 1, the redundancy factor p=1-y. Referring to FIG. 6, in some embodiments of this application, a redundancy factor may be generated or determined based on a loss ratio and a transmission congestion level from a source end to a destination end, and a redundancy degree may be generated or determined based on the loss ratio and the transmission congestion level. In this embodiment, the source end may obtain a loss ratio and a transmission congestion level from the destination end; determine a redundancy degree based on the loss ratio and the transmission congestion level, where the redundancy degree is positively correlated to the loss ratio and is negatively correlated to the transmission congestion level; and determine a redundancy factor based on the loss ratio and the transmission congestion level, where the redundancy factor is positively correlated to the loss ratio and is negatively correlated to the transmission congestion level.

In this embodiment, a vector (redundancy degree, redundancy factor) is a function of a vector (loss ratio, transmission congestion level). A redundancy degree non-strictly increases as a loss ratio increases, and non-strictly decreases as a transmission congestion level increases. A redundancy factor non-strictly increases as a loss ratio increases, and non-strictly decreases as a transmission congestion level increases.

For example, a redundancy factor may be calculated by using the following formula:

$$redundancy\ factor=K1*loss\ ratio+K2*transmission\ congestion\ level+C$$

where K1, K2, and C are constant parameters and may be empirical values, K1 is a positive number, and K2 is a negative number.

A redundancy degree may be calculated by using a similar formula.

It should be noted that, the formulas listed above are only an example and are not intended to limit this application. Alternatively, another formula may be used during specific application.

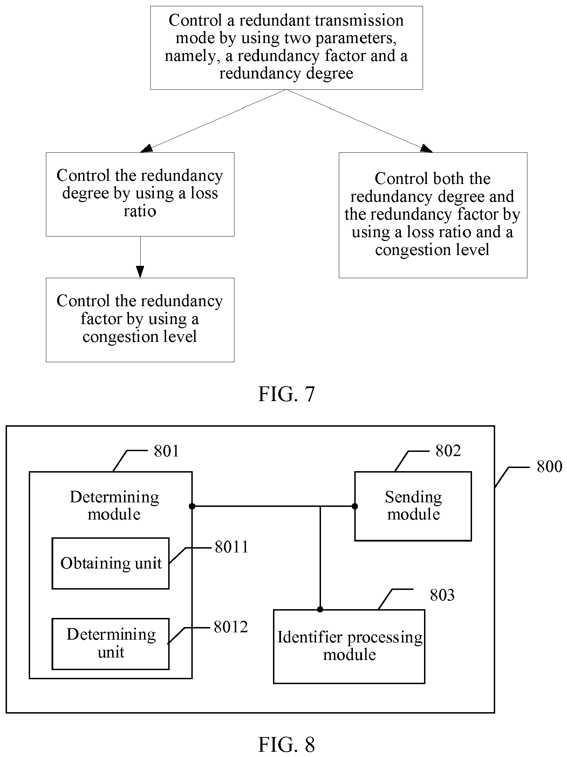

Referring to FIG. 7, a relationship between the foregoing three embodiments is shown. In the embodiment in FIG. 4, the redundancy degree is controlled by using the loss ratio. In the embodiment in FIG. 5, the redundancy factor is controlled by using the transmission congestion level. In the embodiment in FIG. 6, both the redundancy degree and the redundancy factor are controlled by using the loss ratio and the transmission congestion level. It is easily understood that, the embodiments shown in FIG. 4 and FIG. 5 are special examples of the embodiment shown in FIG. 6.

It may be understood that, the foregoing solutions of the embodiments of this application may be, for example, specifically implemented on various network devices in various transmission networks.

In the foregoing solutions of the embodiments of this application, a redundancy degree and a redundancy factor may be determined based on a transmission congestion level and a loss ratio, and redundant transmission control is performed by using the two parameters, namely, the redundancy degree and the redundancy factor, to reduce the loss ratio of transmission.

In the foregoing solutions of the embodiments of this application, redundant transmission is performed on only a part of data and not on all data. In this way, the redundant transmission mode may be used for important data, thereby reducing a loss ratio of the important data and improving transmission quality for the important data. The redundant transmission mode may not be used for other data, thereby reducing a quantity of transmitted data packets and reducing transmission bandwidth consumption.

The foregoing solutions of the embodiments of this application may automatically adapt to a current situation of a bandwidth of a transmission network, and reduce a loss ratio of transmission; may improve QoE (Quality of Experience, quality of experience) of a service such as a rate of a video service; and may reduce costs of reconstructing and upgrading the transmission network, and provide a high-quality service without a need of improving quality of the transmission network.

(Embodiment 2) To better implement the foregoing solutions of the embodiments of this application, a related apparatus for cooperatively implementing the foregoing solutions is further provided below.

Referring to FIG. 8, an embodiment of this application provides an apparatus 800 for reducing a loss ratio of transmission. The apparatus 800 may include:

a determining module 801, configured to determine a redundancy factor and a redundancy degree, where the redundancy factor indicates a proportion occupied by data for which redundant transmission is required, and the redundancy degree indicates a quantity of copies repeatedly transmitted during the redundant transmission; and determine, based on the redundancy factor, a data packet for which the redundant transmission is required; and a sending module 802, configured to repeatedly send the data packet to a destination end based on the quantity of copies indicated by the redundancy degree.

In some embodiments of this application, the apparatus 800 further includes:

an identifier processing module 803, configured to add a particular identifier to the data packet for which the redundant transmission is required.

In some embodiments of this application, the determining module 801 includes: an obtaining unit 8011 and a determining unit 8012.

In some embodiments, the obtaining unit 8011 is configured to obtain a loss ratio; and the determining unit 8012 is configured to determine the redundancy degree based on the loss ratio, where the redundancy degree is positively correlated to the loss ratio.

In some embodiments, the obtaining unit 8011 is configured to obtain a transmission congestion level; and the determining unit 8012 is configured to determine the redundancy factor based on the transmission congestion level, where the redundancy factor is negatively correlated to the transmission congestion level.

In some embodiments, the obtaining unit 8011 is configured to obtain a loss ratio and a transmission congestion level; the determining unit 8012 is configured to determine the redundancy degree based on the loss ratio and the transmission congestion level, where the redundancy degree is positively correlated to the loss ratio and is negatively correlated to the transmission congestion level; and the determining unit 8012 is further configured to determine the redundancy factor based on the loss ratio and the transmission congestion level, where the redundancy factor is positively correlated to the loss ratio and is negatively correlated to the transmission congestion level.

The apparatus 800 for reducing a loss ratio of transmission of this embodiment of this application may be, for example, a network device such as a base station, a gateway, or a terminal, or may be a module in a network device.

It may be understood that, a function of each functional module of the apparatus 800 for reducing a loss ratio of transmission of this embodiment of this application may be specifically implemented based on the method in the foregoing method embodiment. For a specific implementation process, reference may be made to related descriptions in the foregoing method embodiments, and details are not described herein again.

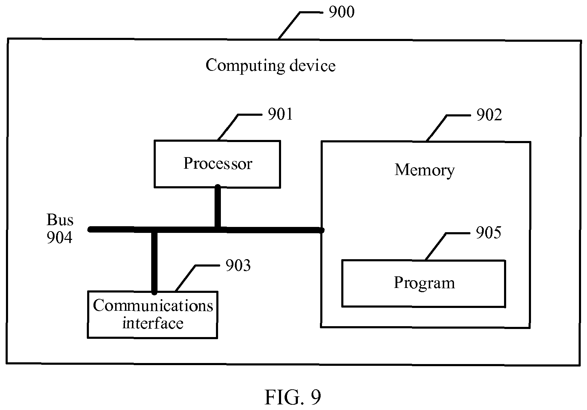

It can be learned from the foregoing description that, in some feasible implementations of this application, data is transmitted in a redundant transmission mode, and the redundant transmission mode is controlled by using two parameters, namely, the redundancy factor and the redundancy degree. Based on the two parameters, redundant transmission is performed on only a part of data and not on all data. In this way, the redundant transmission mode may be used for important data, thereby reducing a loss ratio of the important data and improving transmission quality for the important data. The redundant transmission mode may not be used for other data, thereby reducing a quantity of transmitted data packets and reducing transmission bandwidth consumption. Referring to FIG. 9, an embodiment of this application further provides a computing device 900. The computing device 900 may include:
a processor 901, a memory 902, a communications interface 903, and a bus 904.

The memory 902 is configured to store a program 905, and the processor 901 is connected to the memory 902 by using the bus 904. When the computing device 900 runs, the processor 901 executes the program 905 stored in the memory 902, so that the computing device 900 performs the method for reducing a loss ratio of transmission according to the foregoing method embodiment. The bus 1608 may be an industry standard architecture (Industry Standard Architecture, ISA for short) bus, a peripheral component interconnect (Peripheral Component, PCI for short) bus, an extended industry standard architecture (Extended Industry Standard Architecture, EISA for short) bus, or the like. The bus may be classified into one or more of an address bus, a data bus, and a control bus. For ease of indication, the bus is indicated by using only one bold line in the figure. However, it does not indicate that there is only one bus or only one type of bus.

The memory 902 may include a high-speed RAM (Random Access Memory) memory. Optionally, the memory 902 may further include a non-volatile memory (non-volatile memory). For example, the memory 902 may include a magnetic disk memory.

The processor 901 may be a central processing unit (Central Processing Unit, CPU for short), the processor 901 may be an application-specific integrated circuit (Application Specific Integrated Circuit, ASIC for short), or the processor 901 may be one or more integrated circuits configured to implement this embodiment of this application.

The processor 901 is configured to perform the following steps: determining a redundancy factor and a redundancy degree, where the redundancy factor indicates a proportion occupied by data for which redundant transmission is required, and the redundancy degree indicates a quantity of copies repeatedly transmitted during the redundant transmission; and determining, based on the redundancy factor, a data packet for which the redundant transmission is required.

The communications interface 902 is configured to perform the following step: repeatedly sending the data packet to a destination end based on the quantity of copies indicated by the redundancy degree.

It may be understood that a function of the computing device in this embodiment of this application may be specifically implemented according to the method in the foregoing method embodiments. For a specific implementation process, reference may be made to related descriptions in the foregoing method embodiments, and details are not described herein again.

The computing device in this embodiment of this application may perform the method described in the foregoing method embodiment, and obtain a technical effect that can be obtained by the method embodiment.

An embodiment of this application further provides a computer readable storage medium storing one or more programs, where the one or more programs include an instruction. When the instruction is executed by a computing device including one or more processors, the computing device is caused to perform the method for reducing a loss ratio of transmission according to the foregoing method embodiment.

In the foregoing embodiments, the descriptions of the embodiments have respective focuses. For a part that is not described in detail in an embodiment, reference may be made to related descriptions in other embodiments.

It should be noted that, to make the description brief, the foregoing method embodiments are expressed as a series of actions. However, a person skilled in the art should appreciate that this application is not limited to the described action sequence, because according to this application, some steps may be performed in other sequences or performed simultaneously. In addition, a person skilled in the art should also appreciate that all the embodiments described in the specification are optional embodiments, and the related actions and modules are not necessarily mandatory to this application.

It may be clearly understood by a person skilled in the art that, for the purpose of convenient and brief description, for a specific working process of the foregoing system, apparatus, and unit, reference may be made to a corresponding process in the foregoing method embodiments, and details are not described herein.

In the several embodiments provided in this application, it should be understood that the disclosed system, apparatus, and method may be implemented in other manners. For example, the apparatus embodiment described above is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located at one position, or may be distributed on a plurality of network units. Some or all of the units may be selected according to actual needs to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer readable storage medium. Based on such an understanding, the technical solutions of this application essentially, or the part contributing to the prior art, or all or a part of the technical solutions may be implemented in the form of a software product. The software product is stored in a storage medium and includes several instructions for instructing a computing device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The method and the apparatus for reducing a loss ratio of transmission provided in the embodiments of this application are described in detail above. In this specification, specific examples are used to describe the principle and implementations of this application, and the description of the embodiments is only intended to help understand the method and core idea of this application. Meanwhile, a person of ordinary skill in the art may make, based on the idea of this application, modifications with respect to the specific implementations and the application scope. Therefore, the content of this specification shall not be construed as a limitation to this application.

**Claims**

1.　A method for reducing a loss ratio of transmission, comprising:

　　determining, by a source end, a redundancy factor and a redundancy degree, wherein the redundancy factor indicates a proportion occupied by data for which redundant transmission is required, and the redundancy degree indicates a quantity of copies repeatedly transmitted during the redundant transmission;
　　determining, based on the redundancy factor, a data packet for which the redundant transmission is required; and
　　repeatedly sending the data packet to a destination end based on the quantity of copies indicated by the redundancy degree.

2.　The method according to claim 1, wherein before the repeatedly sending the data packet to a destination end based on the quantity of copies indicated by the redundancy degree, the method further comprises:

　　adding a particular identifier to the data packet for which the redundant transmission is required.

3.　The method according to claim 1 or 2, wherein the determining, by a source end, a redundancy factor and a redundancy degree comprises:

　　obtaining, by the source end, a loss ratio, and determining the redundancy degree based on the loss ratio, wherein the redundancy degree is positively correlated to the loss ratio.

4.　The method according to claim 1 or 2, wherein the determining, by a source end, a redundancy factor and a redundancy degree comprises:

　　obtaining, by the source end, a transmission congestion level, and determining the redundancy factor based on the transmission congestion level, wherein the redundancy factor is negatively correlated to the transmission congestion level.

5.　The method according to claim 1 or 2, wherein the determining, by a source end, a redundancy factor and a redundancy degree comprises:

　　obtaining, by the source end, a loss ratio and a transmission congestion level;
　　determining the redundancy degree based on the loss ratio and the transmission congestion level, wherein the redundancy degree is positively correlated to the loss ratio and is negatively correlated to the transmission congestion level; and
　　determining the redundancy factor based on the loss ratio and the transmission congestion level, wherein the redundancy factor is positively correlated to the loss ratio and is negatively correlated to the transmission congestion level.

6.　An apparatus for reducing a loss ratio of transmission, comprising:

　　a determining module, configured to determine a redundancy factor and a redundancy degree, wherein the redundancy factor indicates a proportion occupied by data for which redundant transmission is required, and the redundancy degree indicates a quantity of copies repeatedly transmitted during the redundant transmission; and determine, based on the redundancy factor, a data packet for which the redundant transmission is required; and

a sending module, configured to repeatedly send the data packet to a destination end based on the quantity of copies indicated by the redundancy degree.

7. The apparatus according to claim 6, further comprising:

   an identifier processing module, configured to add a particular identifier to the data packet for which the redundant transmission is required.

8. The apparatus according to claim 6 or 7, wherein the determining module comprises:

   an obtaining unit, configured to obtain a loss ratio; and
   a determining unit, configured to determine the redundancy degree based on the loss ratio, wherein the redundancy degree is positively correlated to the loss ratio.

9. The apparatus according to claim 6 or 7, wherein the determining module comprises:

   an obtaining unit, configured to obtain a transmission congestion level; and
   a determining unit, configured to determine the redundancy factor based on the transmission congestion level, wherein the redundancy factor is negatively correlated to the transmission congestion level.

10. The apparatus according to claim 6 or 7, wherein the determining module comprises:

   an obtaining unit, configured to obtain a loss ratio and a transmission congestion level; and
   a determining unit, configured to determine the redundancy degree based on the loss ratio and the transmission congestion level, wherein the redundancy degree is positively correlated to the loss ratio and is negatively correlated to the transmission congestion level; wherein
   the determining unit is further configured to determine the redundancy factor based on the loss ratio and the transmission congestion level, wherein the redundancy factor is positively correlated to the loss ratio and is negatively correlated to the transmission congestion level.

FIG. 1

FIG. 2

FIG. 3

Loss ratio

↓

Redundancy  Redundancy
degree  factor

↓

| 1 | 2.0 | 2.1 | 3 | 4 | 5.0 | 5.1 |

Destination end ← Transmission system ← Source end

FIG. 4

Transmission
Loss ratio  congestion level

↓  ↓

Redundancy  Redundancy
degree  factor

↓

| 1 | 2.0 | 2.1 | 3 | 4 | 5.0 | 5.1 |

Destination end ← Transmission system ← Source end

FIG. 5

Loss ratio+transmission
congestion level

↓  ↓

Redundancy  Redundancy
degree  factor

↓

| 1 | 2.0 | 2.1 | 3 | 4 | 5.0 | 5.1 |

Destination end ← Transmission system ← Source end

FIG. 6

Control a redundant transmission
mode by using two parameters,
namely, a redundancy factor and a
redundancy degree

Control the redundancy
degree by using a loss
ratio

Control both the
redundancy degree and
the redundancy factor by
using a loss ratio and a
congestion level

Control the redundancy
factor by using a
congestion level

FIG. 7

801
Determining
module

8011
Obtaining unit

8012
Determining
unit

802
Sending
module

800

803
Identifier processing
module

FIG. 8

FIG. 9

# INTERNATIONAL SEARCH REPORT

| International application No. |
|---|
| **PCT/CN2017/072473** |

**A. CLASSIFICATION OF SUBJECT MATTER**

H04L 1/00 (2006.01) i

According to International Patent Classification (IPC) or to both national classification and IPC

**B. FIELDS SEARCHED**

Minimum documentation searched (classification system followed by classification symbols)

H04L; H04W; H04Q

Documentation searched other than minimum documentation to the extent that such documents are included in the fields searched

Electronic data base consulted during the international search (name of data base and, where practicable, search terms used)

CNPAT, CNKI, WPI, EPODOC: packet loss rate, data, source terminal, identifier, mark, proportion, number, reducing, transmission, packet, loss, rate, quality, source, redundancy, factor, redundant, repeated

**C. DOCUMENTS CONSIDERED TO BE RELEVANT**

| Category* | Citation of document, with indication, where appropriate, of the relevant passages | Relevant to claim No. |
|---|---|---|
| PX | CN 105897378 A (SHANGHAI HUAWEI TECHNOLOGIES CO., LTD.), 24 August 2016 (24.08.2016), claims 1-10 | 1-10 |
| X | CN 103312705 A (TENCENT TECHNOLOGY (SHENZHEN) CO., LTD.), 18 September 2013 (18.09.2013), description, pages 4-6 | 1-10 |
| A | WO 2011110130 A2 (HUAWEI TECHNOLOGIES CO., LTD.), 15 September 2011 (15.09.2011), the whole document | 1-10 |
| A | CN 101686106 A (HUAWEI TECHNOLOGIES CO., LTD.), 31 March 2010 (31.03.2010), the whole document | 1-10 |

☐ Further documents are listed in the continuation of Box C.    ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 30 March 2017 (30.03.2017) | **02 May 2017 (02.05.2017)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**LI, Kai**<br><br>Telephone No.: (86-10) **62413120** |

Form PCT/ISA/210 (second sheet) (July 2009)

## INTERNATIONAL SEARCH REPORT
### Information on patent family members

International application No.

**PCT/CN2017/072473**

| Patent Documents referred in the Report | Publication Date | Patent Family | Publication Date |
|---|---|---|---|
| CN 105897378 A | 24 August 2016 | None | |
| CN 103312705 A | 18 September 2013 | WO 2014194622 A1 | 11 December 2014 |
| | | US 2014355410 A1 | 04 December 2014 |
| WO 2011110130 A2 | 15 September 2011 | CN 102845008 A | 26 December 2012 |
| CN 101686106 A | 31 March 2010 | None | |

Form PCT/ISA/210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201610210746